# EUROPÄISCHE PATENTSCHRIFT

(11) **EP 2 762 933 B1**
(45) Veröffentlichungstag und Bekanntmachung des Hinweises auf die Patenterteilung: **09.11.2016**
(21) Anmeldenummer: 13005811.8
(22) Anmeldetag: 13.12.2013
(51) Int. Cl.: G02B 6/00

(54) **"Betriebszustandswarnvorrichtung"**
Operating state warning device
Dispositif d'avertissement sur l'état de fonctionnement

(30) Priorität: 11.01.2013 DE 102013000336
(43) Veröffentlichungstag der Anmeldung: 06.08.2014
(73) Patentinhaber: WERMA Holding GmbH + Co. KG, 78604 Rietheim-Weilheim (DE)
(72) Erfinder: Kensy, Daniel, 78532 Tuttlingen (DE); Höhler, Christian, 78669 Wellendingen (DE)
(74) Vertreter: Otten, Roth, Dobler & Partner mbB Patentanwälte

(56) Entgegenhaltungen:
- FR-A1- 2 869 975
- JP-A- 2012 212 525
- US-A1- 2008 285 301
- US-A1- 2011 310 587
- US-A1- 2012 069 595

## Beschreibung

Die Erfindung betrifft eine
Betriebszustandswarnleuchtvorrichtung zur optischen Anzeige von wenigstens einem Betriebszustand bzw. von mehreren, unterschiedlichen Betriebszuständen von einem technischen Gerät wie einer Maschine, einer Anlage, eines Fahrzeugs oder dergleichen nach dem Oberbegriff des Anspruchs 1.

### Stand der Technik

Derartige Betriebszustandswarnleuchtvorrichtungen bzw. Signalgeräte wie Signalsäulen oder dergleichen sind bereits seit Jahren in unterschiedlichsten Varianten im Einsatz. Vielfach ist die klassische Signalsäule mit drei auswechselbaren Wechselmodulen im Einsatz, die gewöhnlich die Farbkombination rot, gelb sowie grün aufweist. Da Signalsäulen meistens modulartig aufgebaut sind, können auch durchaus zusätzliche Wechselmodule in den Farben blau oder weiß etc. aufgenommen oder einzelne Wechselmodule bei sich ändernden Betriebsbedingungen auch wieder entfernt werden. Vielfach sind auch akustische Signalgeber wie Piezoscheiben oder Mehrtongeneratoren oder Hörner etc. im Gerät integriert, sodass nicht nur eine optische, sondern auch eine akustische Signalisierung erfolgen kann.

In den letzten Jahren hat sich die Flexibilität entsprechender Signalgeräte immer mehr erhöht. So sind beispielsweise mit Hilfe von sogenannten RGB-LED's auch Signalsäulen im Einsatz, die eine einheitliche Kalotte aufweisen und im störungsfreien Betrieb lediglich ein Teil der Kalotte mit der Farbe grün aufleuchtet, jedoch im Störungsfall vollständig rot aufleuchten können.

Gerade durch die Verwendung von RGB-LED's sind zudem nahezu alle denkbaren Leuchtfarben mit einer entsprechenden elektronischen Steuerung realisierbar. So ist beispielsweise bereits aus der DE 2007 005 495 U1 der Anmelderin eine Warnleuchtsäule mit RGB-LED's bekannt, die frei konfigurierbar ist. Das bedeutet, dass der Anwender je nach Anwendungsfall einen oder mehrere Leuchtparameter der Warnleuchten konfigurieren kann.

JP 2012-212525 offenbart eine Betriebszustandswarnleuchtvorrichtung zur optischen Anzeige von einem Betriebszustand von einem technischen Gerät.

Bei den bisher verwendeten Signalgeräten sind die Kalotten als Hohlkörper, z.B. als Hohlzylinder, ausgebildet, innerhalb derer, meist zentrisch, die Leuchtmittel wie LED, Glühbirne etc. angeordnet sind. Diese LED's bzw. Warnleuchtelemente sind die jeweilige Warnlichtquelle, wobei das vom Warnleuchtelement erzeugte sichtbare Licht durch den hohlen Innenraum der Kalotte bzw. der Signalsäule auf die transparente Kalotte trifft und von dieser bzw. von deren Außenfläche nach außen abgestrahlt wird, sodass entsprechende Personen das Aufleuchten des jeweiligen Moduls bzw. der jeweiligen Leuchtfarbe erkennen können.

Nachteilig hierbei ist jedoch, dass gerade bei der Verwendung von LED's, die eine sehr eng begrenzte Abstrahlrichtung aufweisen, z.B. eine Rundumausleuchtung der hohlzylindrischen Kalotte durch vergleichsweise aufwendige und wirtschaftliche ungünstige Anordnungen zahlreicher LED's auf meist mehreren turmartig zueinander und längs um die zentrale Mittelline/Längsache angeordneten Leiterplatinen notwendig ist.

Darüber hinaus weisen die Kalotten zur Optimierung der Lichtabstrahlung meist innenseitig aufwendige geometrische Strukturen auf. Da die Kalotten gewöhnlich mit Gießverfahren, insbesondere mittels Kunststoffgießverfahren, hergestellt werden, sind für die Herstellung von innen angeordneter, aufwendiger geometrischer Strukturen der Kalotten entsprechend aufwendige und komplexe Gießwerkzeuge notwendig. Dementsprechend wirtschaftlich ungünstig ist die Herstellung entsprechend komplexer Kalotten.

Zudem ist bei Signalgeräten mit entsprechend als Hohlkörper ausgebildeten Kalotten auch das Design beschränkt. In letzter Zeit sind jedoch auch die ästhetischen Anforderungen an Warnleuchtvorrichtungen bzw. Signalgeräten/Signalsäulen auch in Bezug auf deren Design bzw. Gestaltung immer anspruchsvoller geworden.

### Aufgabe und Vorteile der Erfindung

Aufgabe der Erfindung ist es demgegenüber, eine Betriebszustandswarnleuchtvorrichtung der einleitend genannten Art vorzuschlagen, die ohne großen konstruktiven Aufwand, wirtschaftlich günstig und mit neuen Gestaltungsmöglichkeiten realisierbar ist.

Diese Aufgabe wird, ausgehend von einer Vorrichtung der einleitend genannten Art, durch die Merkmale des Anspruchs 1 gelöst. Durch die in den Unteransprüchen genannten Maßnahmen sind vorteilhafte Auswirkungen und Weiterbildungen der Erfindung möglich.

Dementsprechend zeichnet sich eine erfindungsgemäße Vorrichtung dadurch aus, dass das Warnleuchtelement an der Stirnseitenfläche zum Einkoppeln des Warnlichts in das Abstrahlelement angeordnet ist und dass das Abstrahlelement Streumittel zum Streuen des Warnlichts aufweist, sodass das Warnlicht über die Stirnseitenfläche in das Abstrahlelement eintritt und zur Abstrahlfläche umlenkbar ist.

Mit Hilfe einer derartigen, stirnseitigen Anordnung des Warnleuchtelements am Abstrahlelement wird eine völlige Abkehr der bisherigen Anordnung des Warnleuchtelementes innerhalb bzw. zentral innerhalb des Hohlkörpers bzw. der Kalotte bzw. des von der Warnleuchtabstrahlfläche ummantelten Hohlraums realisiert.

Durch die vorteilhaften Streumittel wird das stirnseitig eingekoppelte Licht in vorteilhafter Weise (um ca. 90°) umgelenkt und durch die wenigstens eine Warnleuchtabstrahlfläche aus dem Abstrahlelement ausgekoppelt bzw. aus der erfindungsgemäßen Vorrichtung auskoppelt.

Gemäß der Erfindung können völlig neuartige Designmöglichkeiten bzw. Gestaltungsvarianten realisiert werden.

Auch wird die Anordnung beispielsweise von LED's als Warnleuchtelemente mit geringerem konstruktivem Aufwand möglich. Eine Anordnung wie beim Stand der Technik, wobei beispielsweise mehrerer zentral innerhalb einer Hohlkalotte angeordneter Leiterplattenstreifen, die voll umfänglich abstrahlen, ist entbehrlich und trotzdem kann zum Beispiel eine 360°-Abstrahlung/-Auskopplung realisiert werden. So kann mit Hilfe der vorliegenden Erfindung beispielsweise eine Anordnung der Warnleuchtelemente mit Abstrahlrichtung in und/oder entgegen der Längsrichtung bzw. Längsachse der Vorrichtung bzw. des Signalgerätes/Signalsäule vorgesehen werden und durch die vorteilhafte Umlenkung mittels der Streumittel, kann eine seitliche bzw. quer zur Längsrichtung bzw. Längsachse gerichtete Auskopplung des Warnlichts realisiert werden.

Vorzugsweise ist die Stirnseitenfläche kleiner als die Warnleuchtabstrahlfläche. So kann der benötigte Platzbedarf für die Warnleuchtelemente im Vergleich zum Stand der Technik reduziert und/oder eine großflächige bzw. konstruktiv aufwendige Anordnung oder Platzierung der Warnleuchtelemente wie LED's gemäß dem Stand der Technik kann entfallen. Zudem kann mit Hilfe einer vergleichsweise kleinen Stirnseitenfläche, in die das Warnlicht eingekoppelt wird, eine besonders große oder gar eine nahezu beliebig große Warnleuchtabstrahlfläche gemäß der Erfindung realisiert werden.

Vorteilhafterweise ist ein Reflektor bzw. eine Reflektorschicht an einer Seitenfläche des Abdeckelementes angeordnet, vorzugsweise an der auf der Warnleuchtabstrahlfläche gegenüberliegenden Seite des Abstrahlelementes. Bei dieser Ausführungsform wird somit das Warnlicht von der einen Seite des Abstrahlelementes durch vorteilhafte Reflexion durch die gesamte Dicke des Abstrahlelementes hindurch geleitet und auf der gegenüberliegenden Seite bzw. an der Warnleuchtabstrahlfläche gemäß der Erfindung ausgekoppelt, um den entsprechenden Betriebszustand des technischen Gerätes gemäß der Erfindung anzuzeigen.

Eigentlich führt die Einkopplung des Warnlichts durch die Stirnfläche, die im Wesentlichen nahezu senkrecht zur Einkoppelrichtung und/oder zu der/den Abstrahlflächen des Abstrahlelementes ausgerichtet ist, an der/den Abstrahlflächen zu einer Totalreflexion des Warnlichts. Durch die vorteilhaften Streumittel wird jedoch das optische Warnlicht in vorteilhafter Weise derart umgelenkt, dass an diesen quer/senkrecht zur Stirnfläche ausgerichteten Abstrahlflächen optisches Warnlicht nicht durch eine Totalreflexion wieder zurück in das Abstrahlelement reflektiert wird, sondern an der Abstrahlfläche bzw. an diesem optischen Übergang in vorteilhafter ausgekoppelt werden kann. Das bedeutet, dass das sehr spitzwinklig bzw. nahezu parallel zur Abstrahlfläche eingekoppelte Warnlicht durch die Streumittel in vorteilhafter Weise derart umgelenkt wird, dass dieses mit einem Winkel auf die Abstrahlfläche auftrifft, der größer als der Winkel der entsprechenden Totalreflexion ist und deshalb gemäß der Erfindung ausgekoppelt wird.

Bei einer vorteilhaften Ausführungsform der Erfindung sind die Streumittel als an der Warnleuchtabstrahlfläche und/oder Oberfläche des Abstrahlelements angeordnete Diffusorfläche und/oder Diffusorschicht ausgebildet. Hierdurch wird eine Streuung des Warnlichts erreicht und in vorteilhafter Weise auch, dass das spitzwinklig an die Abstrahlfläche des Abstrahlelementes anfallende Warnlicht nicht durch Totalreflexion wieder in das Abstrahlelement spitzwinklig abgelenkt wird, sondern mit größerem bzw. stumpfwinkligen Umlenkwinkel umgelenkt und somit durch die Warnleuchtabstrahlfläche gemäß der Erfindung austreten bzw. auskoppeln kann.

Beispielsweise ist eine am Abstrahlelement angeordnete Lichtbrechschicht und/oder die Diffusorschicht optisch dünner oder optisch dichter als das Abstrahlelement. Hiermit wird der optische Übergang bzw. die Brechung an der Grenzfläche zwischen Abdeckelement und Schicht bzw. Diffusorschicht in vorteilhafter Weise verändert, so dass das Warnlicht gemäß der Erfindung auskoppelt.

Bei einer besonderen Ausführungsform kann die Diffusorfläche bzw. die Diffusorschicht zugleich die Warnleuchtabstrahlfläche umfassen. Das bedeutet, dass hierbei das auf die Diffusorfläche bzw. Diffusorschicht auftretende Warnlicht nicht wieder zurück in das Abstrahlelement reflektiert wird, sondern an diesem nach außen hin abgelenkt wird, sodass die Diffusorfläche bzw. Diffusorschicht und/oder die Lichtbrechschicht zugleich die Warnleuchtabstrahlfläche umfasst.

Eine vorteilhafte Diffusorfläche und/oder Diffusorschicht kann nicht nur an der Oberfläche des Abstrahlelementes, sondern auch innerhalb des Abstrahlelementes angeordnet werden. Es hat sich gezeigt, dass auch hierdurch in vorteilhafter Weise das Warnlicht durch die Warnleuchtabstrahlfläche auskoppelbar ist. Zudem ergeben sich weitere neuartige Gestaltungsmöglichkeiten, vor allem bezüglich einer zweiseitigen Auskopplung des Warnleuchtlichtes.

Generell kann eine vorteilhafte Diffusorfläche und/oder Diffusorschicht dadurch realisiert werden, dass das Abstrahlelement eine Trübung aufweist. Beispielsweise wird eine derartige Trübung durch Sandstrahlen, Säureätzung oder dergleichen realisiert. Sandstrahlen bzw. Säureätzung von Glas oder Kunststoff wie Plexiglas wird vorzugsweise an der Oberfläche des Abstrahlelementes realisiert.

Darüber hinaus kann jedoch auch eine Trübung bzw. eine Herstellung einer Diffusorfläche bzw. Diffusorschicht nicht nur an der Oberfläche, das heißt außen, sondern auch innerhalb des Abstrahlelementes durch vorteilhafte Laserverfahren oder dergleichen realisiert werden. So kann z.B. durch eine Laserbestrahlung des Abstrahlelementes eine Diffusorfläche an der Oberfläche und/oder sogar auch innerhalb des Abstrahlelements realisiert werden, wobei z.B. punktuell bzw. kleinflächig durch thermische Erhitzung eine Materialumwandlung realisiert wird, sodass an entsprechenden Streuzentren das Warnlicht gemäß der Erfindung umlenkbar ist und in vorteilhafter Weise durch die Warnleuchtabstrahlfläche ausgekoppelt wird.

Darüber hinaus kann auch durch Material abtragende Verfahren, d.h. nicht nur mittels Sandstrahlen oder dergleichen, sondern auch durch spanbearbeitende Verfahren Ausnehmungen bzw. Aussparungen und/oder Aufrauungen/Trübungen am Abstrahlelement realisiert werden. Die hierbei generierte, angeraute Oberfläche kann das Warnlicht gemäß der Erfindung umlenken und in vorteilhafter Weise durch die Warnleuchtabstrahlfläche ausgekoppeln.

In einer besonderen Weiterbildung der Erfindung sind die Streumittel als am und/oder innerhalb des Abstrahlelementes angeordnete Streukörper und/oder Streupartikel ausgebildet. Derartige Streukörper bzw. Streupartikel können bereits bei der Herstellung des Abstrahlelementes eingelagert bzw. verteilt werden. Beispielsweise können bei der Verwendung von einem Abstrahlelement aus Kunststoff in die transparente Kunststoffmatrix sehr feinkörnige Kunststoffpartikel und/oder Partikeln aus anderem Material mit Licht brechenden bzw. streuenden Eigenschaften eingelagert werden.

Vorzugsweise sind die Körper- bzw. Teilchendurchmesser kleiner als die Wellenlänge des sichtbaren Lichts, sodass diese zu einer vorteilhaften Gestaltung führen bzw. kaum und/oder nicht durch ein menschliches Auge innerhalb des Abstrahlelementes wahrnehmbar sind. Hierdurch kann eine völlig transparente Gestaltung des Abstrahlelementes im ausgeschalteten Zustand verwirklicht werden, was zu völlig neuartigen Gestaltungs- bzw. Designmöglichkeiten führt.

Vorteilhafterweise beim Betrieb des Warnleuchtelementes bzw. beim Leuchten des Warnleuchtelementes wird das Warnlicht an den vorteilhaften Streukörpern bzw. Streupartikeln umgelenkt und in vorteilhafter Weise an der Warnleuchtabstrahlfläche ausgekoppelt. Bei der Verwendung von farbigem Licht wird hierdurch das ursprüngliche transparente bzw. durchsichtige Abstrahlelement durch das Warnlicht entsprechend farbig umgestaltet und hierdurch in besonderer bzw. überraschender Weise von entsprechenden Personen wahrgenommen.

In einer vorteilhaften Ausführungsform der Erfindung sind die Streukörper bzw. Streupartikel und/oder die Diffusorflächen bzw. Diffusorschichten gleichmäßig bzw. homogenen am bzw. im Abstrahlelement verteilt. Hierdurch ergibt sich eine homogene Lichtauskopplung im eingeschalteten Betriebszustand.

In einer alternativen Ausführungsform der Erfindung ist die Anordnung bzw. Verteilung der Streukörper bzw. Streupartikel und/oder die Ausbildung der Diffusorfläche bzw. Diffusorschicht partiell bzw. lediglich über einen Teil bzw. eine Teilfläche des Abstrahlelementes bzw. der Mantelfläche der Vorrichtung gemäß der Erfindung. Dementsprechend ist keine homogene, sondern eine innerhalb vorgegebener insbesondere homogener Teilflächen unterschiedliche Verteilung und/oder eine partielle, jedoch in sich homogenen flächige Verteilung der Streumittel gemäß dieser Ausführungsform vorgesehen. Hiermit können beispielsweise Muster und/oder Symbole und/oder Buchstaben bzw. Text in vorteilhafter Weise generiert werden. Vorzugsweise werden derartige Muster bzw. Buchstaben oder dergleichen erst im eingeschalteten Zustand sichtbar bzw. leuchten durch das Warnlicht in vorteilhafter Weise auf und sind im ausgeschalteten Zustand nahezu unsichtbar bzw. transparent. Dies kann in besonderer Weise die Aufmerksamkeit der entsprechenden Personen erhöhen.

In vorteilhafter Weise ist das Abstrahlelement im Wesentlichen aus Vollmaterial ausgebildet. Beispielsweise ist das Abstrahlelement als Platte oder Zylinder ausgebildet.

Hierdurch ergeben sich völlig neuartige Gestaltungsmöglichkeiten für eine Vorrichtung gemäß der Erfindung.

Gerade durch die Verwendung einer Platte bzw. eines flachen Abstrahlelements vorzugsweise in Form eines Quaders oder eines Prismas, wobei die Stirnseiten vergleichsweise klein bzw. dünn gegenüber der einzelnen Abstrahlfläche ist, kann eine besonders flache Vorrichtung gemäß der Erfindung realisiert werden. So kann beispielsweise eine Vorrichtung gemäß der Erfindung mit einem oder zwei Zentimeter Dicke realisiert werden. Die Verwendung entsprechend plattenartiger Vorrichtungen gemäß der Erfindung eröffnet völlig neuartige Anwendungsmöglichkeiten bzw. Gestaltungsmöglichkeiten. Beispielsweise kann eine Stirnseite mit einer Breite von ca. 0,5cm bis 2cm vorgesehen werden und z. B. eine der zwei gegenüberliegende Abstrahlflächen etwa von jeweils 10cm x 10cm oder 20cm x 15cm oder 10cm x 40cm etc. aufweisen. Hierbei kann nicht nur auf einer Seite der Platte eine entsprechend großflächige Auskopplung des Warnlichts, sondern auf den beiden gegenüber liegenden Plattenflächen kann die Auskopplung realisiert werden.

In einer besonderen Weiterbildung der Erfindung ist das Abstrahlelement im Wesentlichen als Zylinder oder als Hohlzylinder ausgebildet, wobei vorzugsweise die Höhe größer als der Außendurchmesser ist. Bei einer derartigen Variante der Erfindung erfolgt die Anordnung der Warnleuchtelemente bzw. der LED's oder dergleichen gemäß der Erfindung in Richtung der Längsachse bzw. Mittelachse, d.h. an der Grundfläch/Stirnseite. Dementsprechend ist bei diesen Varianten die erfindungsgemäße Stirnfläche als Kreis oder Kreis-Ring ausgebildet, an denen das/die Warnleuchtelemente angeordnet sind. Die Warnleuchtabstrahlfläche gemäß der Erfindung ist hierbei die Mantelfläche des Zylinders bzw. des Hohlzylinders. Hiermit wird erreicht, dass durch eine (ebene) flächige bzw. lediglich zweidimensional ausgerichtete Anordnung mehrerer Warnleuchtelemente oder auch nur eines einzigen Warnleuchtelementes an entsprechender Stirnfläche durchaus eine vorteilhafte Rundumabstrahlung in Umfangsrichtung der Zylindermantelfläche realisierbar ist. Hierdurch verringert sich in erheblichem Maß der konstruktive Aufwand zur Anordnung und Realisierung einer Rundumabstrahlung bei einem zylinderförmigen bzw. hohlzylinderförmigen Abstrahlelement im Vergleich zum Stand der Technik.

Darüber hinaus verringert sich der Aufwand zur Realisierung eines Abstrahlelementes gemäß der Erfindung im Vergleich zum Stand der Technik, da nämlich entsprechende aufwendige geometrische Strukturen des Abstrahlelementes verzichtbar sind. Bei der Herstellung bzw. dem Einsatz von einem Abstrahlelement mit einer nahezu exakten Ausformung als Zylinder oder als Hohlzylinder ohne entsprechend komplexe geometrische Muster verringert sich der Herstellungsaufwand und somit die Herstellungskosten gegenüber dem bisherigen Stand der Technik.

Generell kann eine Vorrichtung gemäß der Erfindung sowohl als einstufige, als auch als mehrstufige Betriebszustandswarnleuchtvorrichtung verwendet werden. Beispielsweise wird ein einziges Abstrahlelement bzw. eine Baueinheit als Abstrahlelement gemäß der Erfindung verwendet, dies kann z.B. bei einer einstufigen aber auch bei einer mehrstufigen Vorrichtung bzw. Signalsäule oder dergleichen zweckmäßig sein. Vorzugsweise ist die Betriebszustandswarnleuchtvorrichtung als Signalsäule mit wenigstens drei Warnleuchteinheiten und/oder drei separat leuchtbaren Warnleuchtauskoppelflächen und/oder Abstrahlelementen ausgebildet.

Eine mehrstufige Vorrichtung bzw. Signalsäule kann in vorteilhafter Weise als fest vorkonfigurierte Vorrichtung gemäß der Erfindung ausgebildet werden. Vorzugsweise weist die Vorrichtung/Signalsäule lösbar verbindbare und/oder das Warnlicht weiterleitende, optisch verbindbare Warnlichteinheiten auf. So sind beispielsweise plattenförmige Abstrahlelemente oder auch prismaförmige oder zylinder- bzw. auch hohlzylinderförmige Abstrahlelemente vorteilhaft miteinander verbindbar und wieder lösbar ausbildbar, sodass ein modularer Aufbau einer mehrstufigen Vorrichtung gemäß der Erfindung ohne großen Aufwand realisierbar ist.

Grundsätzlich kann bei mehrstufigen Ausführungsformen der Erfindung durchaus auch eine Variante realisiert werden, bei der je Modul wenigstens ein Leuchtelement/LED oder LED-Gruppe pro Modul vorgesehen ist. Dementsprechend ist bei dieser Ausführungsvarianten auch eine Energieversorgung bzw. Informationsdatenleitung zu jedem Modul bzw. zum Warnleuchtelement bzw. zur LED/LED-Gruppe vorgesehen.

Allerdings kann im Unterschied zum Stand der Technik, bei dem neben der Energieversorgung der einzelnen Module bzw. Leiterplatten auch eine separate Informationsdatenleitung von Modul zu Modul weiter geleitet bzw. lösbar verbindbar vorgesehen werden musste, mit der vorliegenden Erfindung dagegen auch eine vorteilhafte Variante der Modularität realisiert werden, wobei nicht elektrische Energie, sondern das optische, sichtbare Licht von Modul zu Modul weiter geleitet wird. D.h. ein Modul ist als Lichtleiter ausgebildet. Hierbei wird in festgelegter/vorgegebener Weise je Warnleuchteinheit das jeweilige Warnlicht ausgekoppelt. Dementsprechend ist in vorteilhafter Weise eine optisch-mechanische Kopplung bzw. optisch-mechanische Verbindung zwischen vorteilhaften Warnleuchteinheiten bzw. Abstrahlelementen vorgesehen, womit eine mehrstufige Warnleuchtsäule gemäß der Erfindung realisierbar ist. D.h. dass elektrische Verbindungsleitungen oder dergleichen zwischen den einzelnen Warnleuchteinheiten bzw. Abstrahlelementen entbehrlich sind, was den konstruktiven und wirtschaftlichen Aufwand deutlich reduziert.

Vorteilhafterweise ist ein (gemeinsames) Basismodul (zum Beispiel als Sockel und/oder als Deckel ausgebildet) für zwei oder mehr Warnleuchteinheiten bzw. Abstrahlelemente vorgesehen, das zumindest das oder die Warnleuchtelemente bzw. LED oder LED-Gruppen für die verschiedenen Warnleuchteinheiten und/oder eine gemeinsame elektronische Kontrolleinheit aufweist. Beispielsweise kann ein vorteilhaftes Basismodul rote, gelbe und grüne LED's aufweisen, die jeweils in einem bestimmten Betriebsmodus separat angesteuert bzw. betrieben werden. Durch eine vorteilhafte Lichtleitung zum jeweiligen Modul bzw. von Modul zu Modul kann eine separate Auskopplung bzw. eine Auskopplung an vorgegebenen Warnleuchtabstrahlflächen in vorteilhafter Weise realisiert werden.

Alternativ oder in Kombination hierzu kann auch bei einer Verwendung von RGB-LED's eine mehrstufige bzw. mehrfarbige Signalsäule realisiert werden, wobei die RGB-LED's verschiedene Farben generieren und an vorgegebenen Flächen gemäß der Erfindung auskopplen. Beispielsweise ist bei RGB-LED-Varianten eine gemeinsame Abstrahlfläche für mehrere, unterschiedliche Farben bzw. Einheiten oder aber auch für verschiedene, separate Abstrahlflächen vorgesehen.

Vorzugsweise sind wenigstens drei Abstrahlelemente in Richtung der Warnlichtauskopplung hintereinander bzw. nebeneinander als Schichtaufbau angeordnet. Beispielsweise sind je Schicht separate Warnfarben bzw. Warnlichter vorgesehen, sodass je Schicht verschiedenfarbige Warnlichter gemäß der Erfindung ausgekoppelt werden. Beispielsweise koppeln mehrere oder alle Schichten des Schichtaufbaus nahezu in die gleiche Richtung bzw. Richtungen aus. Durch den Schichtaufbau beispielsweise bei einem mehrschichtigen Plattenaufbau, wobei der Betrachter auf die Frontfläche schaut, erkennt dieser zumindest auf den ersten Blick den Schichtaufbau nicht, sondern dieser erkennt vielmehr erst beim Einschalten bzw. Betrieb eines Abstrahlelementes, dass die Vorrichtung gemäß der Erfindung unterschiedliche Warnlicht-Farben auskoppeln kann. So ist diese beispielsweise transparent oder im Normalbetrieb des zu überwachenden technischen Gerätes ist eine erste Schicht grün und bei einem Störungs-Betrieb des zu überwachenden technischen Gerätes erscheint bzw. leuchtet eine zweite Schicht bzw. das zweite Abstrahlelement die erfindungsgemäße Vorrichtung rot.

In einer besonderen Weiterbildung der Erfindung sind wenigstens zwei, vorzugsweise drei Abstrahlelemente konzentrisch zueinander angeordnet. Beispielsweise ist zentral bzw. mittig ein zylinderförmiges Abstrahlelement angeordnet, um das konzentrisch wenigstens ein hohlzylinderförmiges Abstrahlelement oder mehrere hohlzylinderförmige, konzentrische Abstrahlelemente angeordnet sind. Hierdurch ist ein dreidimensionaler bzw. konzentrischer Schichtaufbau realisiert. Dementsprechend weisen die Abstrahlelemente gemäß der Erfindung jeweils einen kreisförmigen bzw. kreisringförmigen Querschnitt/Stirnfläche auf, an denen die Warnleuchtelemente angeordnet sind. Es sind jedoch auch quadratische, rechteckige bzw. polygonförmige wie z.B. sechs-/ achteckige Querschnittsflächen bzw. Ringe/Polygonzüge denkbar.

Auch bei den zuvor genannten konzentrischen Ausführungsvarianten sind die Warnleuchtelemente gemäß der Erfindung stirnseitig angeordnet und koppeln das Warnlicht in vorteilhafter Weise in bzw. im Wesentlichen parallel zur Richtung der Mittelachse bzw. Längsachse in das jeweilige Abstrahlelement ein. Durch die vorteilhaften Streumittel bzw. Streukörper und/oder Diffusorflächen an der Außenfläche der Abstrahlelemente und/oder innerhalb der Abstrahlelemente wird das Warnlicht in vorteilhafter Weise derart umgelenkt, dass diese an den (Hohl-)Zylinder-Mantelflächen bzw. an den Mantelflächen im Wesentlichen quer zur Mittelachse bzw. Längsachse auskoppeln und vom Betrachter wahrgenommen werden. Hierdurch ergeben sich selbst bei Rundumlichtern, das heißt das Warnlicht wird im Wesentlichen voll umfänglich 360° um die Mittelachse herum ausgekoppelt, neue und besonders vorteilhafte Möglichkeiten der Anordnung mehrerer Warnleuchtelemente, insbesondere bzgl. deren Anordnung an/auf der Querschnittsfläche bzw. an der erfindungsgemäßen Stirnfläche. Dementsprechend verringern sich der konstruktive und somit auch der finanzielle Aufwand zur Realisierung entsprechender mehrdimensionaler Vorrichtungen bzw. Signalsäulen.

Vorteilhafterweise weist das Abstrahlelement wenigstens einen Diffusor bzw. ein Diffusorelement oder eine Diffusorschicht auf, sodass die Warnlichtauskopplung besonders homogen verteilt realisierbar ist. Diese Zerstreuung bzw. Homogenisierung des Warnlichts kann sowohl auf der Außenfläche bzw. an der Abstrahlfläche als auch im Innern des Abstrahlelementes vorgesehen werden.

### Ausführungsbeispiel

Ein Ausführungsbeispiel der Erfindung ist in der Zeichnung dargestellt und wird anhand der Figuren näher erläutert.

Im Einzelnen zeigt:
- Figur 1: ein schematischer Schnitt von einer erfindungsgemäßen Vorrichtung mit Plattenform,
- Figur 2: eine schematische Ansicht einer fest vorkonfigurierten dreistufigen, plattenförmigen Vorrichtung gemäß der Erfindung,
- Figur 3: mehrere schematische, geschnitten dargestellte Varianten von möglichen Ausbildungen/Anordnungen von Streumitteln im/an Abstrahlelementen und
- Figur 4: mehrere schematische, geschnitten dargestellte Varianten von stabförmigen bzw. zylinderförmigen Vorrichtungen gemäß der Erfindung.

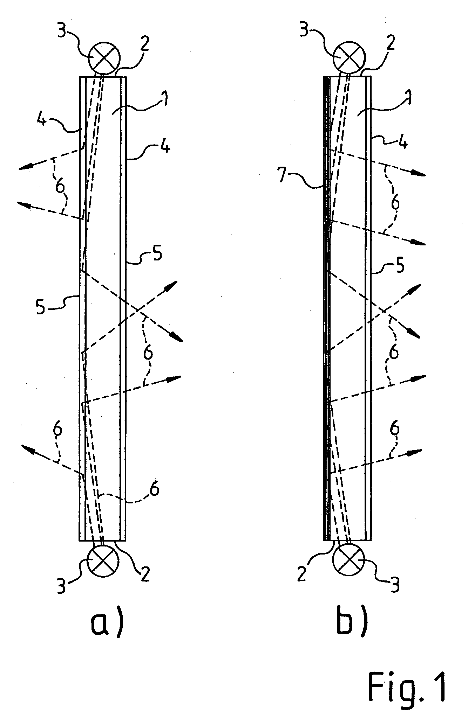

In Figur 1 sind zwei Varianten von Vorrichtungen gemäß der Erfindung mit einem plattenförmigen Abstrahlelement 1 dargstellt. Das Abstrahlelement 1 ist hierbei als ebene Platte mit zwei gegenüberliegenden Stirnseiten 2 gemäß der Erfindung ausgebildet, an denen jeweils wenigstens ein Warnleuchtelement bzw. eine LED 3 angeordnet ist.

Generell ist es von Vorteil, die Abstrahlelemente 1 aus Kunststoff, insbesondere aus transparentem Kunststoff auszubilden.

Bei der Variante gemäß Figur 1a sind auf zwei gegenüber liegenden Abstrahlflächen 4 als Streumittel gemäß der Erfindung je eine Diffusorschicht 5 angeordnet, sodass von den LED's 3 eingestrahltes optisches Licht 6 auf diese in einem spitzen Winkel auftrifft und durch die Diffusorschicht bzw. die Diffusorfläche 5 umgelenkt wird, sodass das sichtbare Licht 6 auf den zwei gegenüber liegenden Abstrahlflächen 4 auskoppelt. Durch die Umlenkung am Diffusor bzw. an der Diffusorschicht 5 wird das Licht 6 ausgekoppelt und wird nicht durch entsprechende Totalreflexion wieder zurückreflektiert.

In Figur 1b ist eine zweite Variante dargestellt, wobei auf einer Seite des Abstrahlelementes 1 ein Reflektor 7 bzw. eine Reflektorfläche/-schicht 7 vorgesehen ist und auf der dieser gegenüberliegenden Seite die Abstrahlfläche 4 ist wiederum ein Diffusor 5 angeordnet. Bei dieser Variante reflektiert der Reflektor 7 das Licht 6 auf seiner Seite des Abstrahlelementes 1 wieder zurück und somit wird dieses vollständig durch das Abstrahlelement 1 hindurch geleitet, sodass dies ausschließlich auf der gegenüberliegenden Seite bzw. auf der Abstrahlfläche 4 das Warnlicht 6 ausgekoppelt wird und u.a. durch den Diffusor 5 in vorteilhafter Weise gestreut wird, sodass ein nahezu homogenes Erscheinungsbild entsteht.

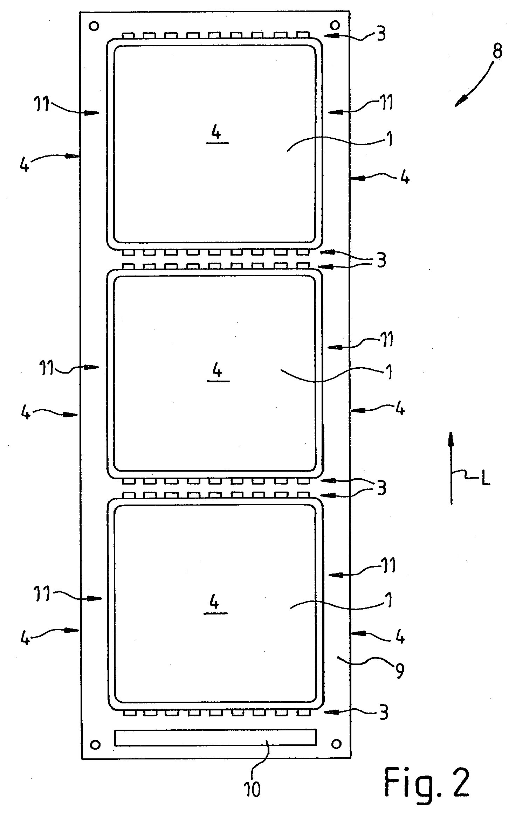

In Figur 2 ist schematisch eine dreistufige Vorrichtung gemäß der Erfindung bzw. eine dreistufige Signalsäule 8 abgebildet, wobei wiederum LED's 3 vorgesehen sind. Die zahlreichen, auf einer Geraden angeordneten LED's 3 strahlen in Längsrichtung L bzw. entgegen dieser Richtung Warnlicht ab, wobei das Warnlicht gemäß der Erfindung in die Stirnseite 2 des jeweiligen Abstrahlelementes 1 einkoppelt und an den Abstrahlflächen 4 in vorteilhafter Weise austritt/auskoppelt.

Die Signalsäule 8 weist in vorteilhafter Weise einen Rahmen 9 bzw. ein Rahmenelement 9 auf, das zur Aufnahme aller drei Stufen bzw. aller drei Abstrahlelemente 1 bzw. Abstrahlflächen 4 ausgebildet ist. So weist die Signalsäule 8 einen mehrschichtigen Aufbau auf, wobei beispielsweise eine Alukern-Leiterplatte zur Ausbildung einer Unterseite des Rahmens 9 vorgesehen ist. Diese Alukern-Leiterplatte ist vorzugsweise im Wesentlichen aus Aluminium realisiert, auf der z.B. eine elektrische Isolationsschicht angeordnet ist und auf dieser wiederum eine Kupferleitbahn angeordnet ist. Auf der Kupferleitbahn sind die LED's 3 einschließlich weiterer vorteilhafter Elektronikbauelemente angeordnet, sodass die Alukernleiterplatte einerseits elektrische Leiterplatine und andererseits durch die vorteilhafte Metall-/Aluschicht auch zur Wärmeableitung der Abwärme der LED's 3 ausgebildet ist.

Zugleich ist die Alukern-Leiterplatte als tragendes Rahmenelement des Rahmens 9 vorgesehen. Darüber hinaus trägt bzw. hält die Alukern-Leiterplatte vorteilhafte Abstrahlelemente 1 in einer darüberliegenden Schicht, das heißt diese werden mit Hilfe einer weiteren Rahmen-Schicht bzw. einem Abdeckelement des Rahmens 9 bzw. einem Abdeckrahmenelement gehaltert. Beispielsweise kann auch das Abdeckelement aus Metall wie Aluminium bestehen, sodass sowohl die Unterseite als auch die Oberseite des Rahmens 9 für den Betrachter einheitlich erscheint und eine vorteilhafte Wärmeableitung durch den Rahmen 9 realisiert wird.

Weiterhin trägt der Rahmen bzw. die Alukern-Leiterplatte in vorteilhafter Weise eine Steuereinheit 10, die zur Ansteuerung der LED's 3 bzw. der drei verschiedenen Stufen ausgebildet ist. Beispielsweise weist die Signalsäule 8 die drei unterschiedlichen Warnleuchtfarben rot, gelb und grün auf.

Bei der Variante gemäß Figur 2 kann der Rahmen 9 beispielweise auch Ausnehmungen bzw. Schlitze 11 auf der rechten und/oder linken Seite in Figur 2 aufweisen, sodass nicht nur vorne und/oder hinten, sondern auch rechts und links eine Abstrahlfläche 4 gemäß der Erfindung realisierbar ist. Das bedeutet, dass bei dem dargestellten Ausführungsbeispiel gemäß Figur 2 die LED's 3 Licht in das Abstrahlelement 1 stirnseitig einkoppeln und dass nicht nur auf die große Abstrahlfläche 4 Warnlicht mittels vorteilhafter Streumittel umgelenkt wird, sondern auch Warnlicht zu den beiden Stirnseiten, an denen keine LED's 3 angeordnet sind, Licht ausgekoppelt wird und somit diese auch als Abstrahlflächen 4 realisiert sind.

Bei der abgebildeten Variante gemäß Figur 2 handelt es sich um eine fest vorkonfektionierte Signalsäule 8. Es ist jedoch auch möglich, dass eine modulare Signalsäule 8 mit entsprechenden plattenförmigen Abstrahlelementen 1 realisiert wird, wobei die einzelnen Stufen bzw. Warnleuchteinheiten in vorteilhafter Weise lösbar verbindbar miteinander zusammengefügt und wieder gelöst werden können. Bei einer entsprechenden modularen Signalsäule 8 ist von Vorteil, eine Elektronikeinheit bzw. Steuereinheit 10 oder dergleichen in einem separaten Steuermodul vorzusehen, das zur Ansteuerung bzw. Betrieb der jeweiligen einzelnen Warnleuchtmodule bzw. Abstrahlelemente 1 ausgebildet ist. Beispielsweise können durch gemeinsame mechanische und/oder elektrische und/oder optische Verbindungsstellen erreicht werden, dass beim Zusammenfügen zweier Module sowohl die Energieversorgung als auch die Informationsdatenübertragung realisiert wird.

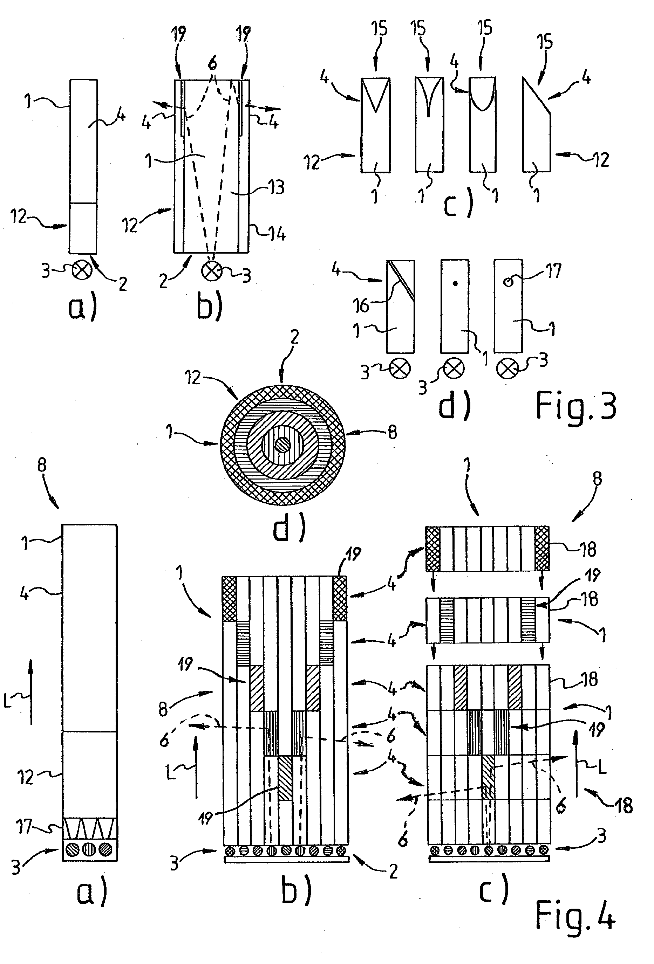

In Figur 3 sind verschiedene Möglichkeiten bezüglich der Umlenkung bzw. Abstrahlung dargestellt. Hierbei kann es sich bei den Abstrahlelementen 1 sowohl um plattenförmige als auch um zylindrische, quaderförmige oder sonstige mehrdimensional ausgebildete Formen handeln. Figur 3a soll eine Variante veranschaulichen, wobei die Streumittel als eine Diffusorfläche 4 bzw. Abstrahlfläche 4 vorgesehen ist, die sowohl angeraut, beschichtet und somit an der äußeren Oberfläche bzw. Außenseite die entsprechende Diffusorfläche 4 bzw. Abstrahlfläche 4 angeordnet sind. Darüber hinaus ist in Figur 3a ein Abschnitt 12 vorgesehen, der beispielsweise eine polierte Oberfläche aufweist, sodass hier das von der LED 3 eingekoppelte Licht aufgrund der hier realisierten Totalreflexion innerhalb des Abstrahlelementes 1 verbleibt bzw. durch diesen Abschnitt 12 zur Fläche 4 weiter geleitet und erst dort ausgekoppelt wird.

Auch kann bei der Variante gemäß Figur 3a der Bereich mit der Abstrahlfläche 4 beispielweise aus einem Kunststoffmaterial bestehen, das im Inneren Streupartikel bzw. Streukörper aufweist, sodass das entsprechende Licht der LED 3 umgelenkt und ausgekoppelt wird. Beispielsweise kann als Material das Abstrahlelement Plexiglas verwendet werden, das im Abschnitt 12 keine Streupartikel umfasst und im Bereich der Fläche 4 vorteilhafte Streupartikel aufweist, die beispielsweise homogen innerhalb des Plexiglases oder dergleichen verteilt angeordnet sind. Auch hierdurch entsteht ein homogenes Erscheinungsbild der Abstrahlfläche 4 bzw. Vorrichtung gemäß der Erfindung.

Figur 3b zeigt eine Variante, wobei ein Abschnitt bzw. ein Bereich 19 als eine angeraute bzw. beschichtete Innenseite/- fläche ausgebildet ist. So ist der Bereich 19 als eine innere Schicht bzw. Struktur 19 ausgebildet, die das (in Figur 3b lediglich angedeutete) Warnlicht 6 entsprechend umlenkt und nach außen zur Abstrahlfläche 4 umlenkt.

Die Anrauung bzw. Beschichtung kann beispielsweise dadurch realisiert werden, dass das Abstrahlelement 1 zweiteilig hergestellt wird, wobei ein inneres Teil 13 und ein äußeres Teil 14, das hohlzylinderförmig ausgebildet ist, in einer definierten Teilfläche sandgestrahlt, säuregeätzt oder mit einer Diffusorschicht belegt wird. Auch kann das Abstrahlelement 1 als Spritzgussteil ausgebildet werden. Es hat sich in ersten Versuchen gezeigt, dass durch eine (etwas) raue Oberfläche eines Spritzguss-Werkzeuges eine Diffusor-Oberfläche generiert, womit in vorteilhafter Weise das Warnlicht 6 gestreut bzw. umgelenkt werden kann. Dies ist eine besonders wirtschaftlich günstige Variante gemäß der Erfindung.

In Figur 3c sind mehrere Varianten abgebildet, wobei mittels verschieden geformter Ausnehmungen bzw. Aussparungen 15 eine Umlenkung des Warnlichts gemäß der Erfindung realisiert wird, sodass die Abstrahlfläche 4 im Bereich der Aussparung 15 realisiert wird.

Weiterhin sind in Figur 3d verschiedene Varianten der Erfindung dargestellt, wobei mittels innerer Reflexionsflächen, beispielsweise mittels Laserbearbeitung, das heißt durch thermische Veränderungen innerhalb des Abstrahlelementes 1, eine Reflexion bzw. Streuung des Warnlichts gemäß der Erfindung realisiert wird. So sind Varianten in Figur 3d beispielhaft dargestellt, wobei eine innere schräge Fläche 16 generiert wird, an der das Warnlicht entsprechend gestreut bzw. umgelenkt wird, sodass in diesem Bereich seitlich die Abstrahlfläche 4 gemäß der Erfindung generiert wird. Auch können punktartige innere Streuflächen bzw. Streuabschnitte 17 generiert werden, die das entsprechende Warnlicht seitlich umlenken und entsprechend gemäß der Erfindung auskoppeln.

Figur 4 zeigt verschiedene Ausführungsvarianten mit einem zylinderförmig ausgebildeten Leuchtkörper bzw. einer zylinderförmigen Signalsäule 8 gemäß der Erfindung. Figur 4a zeigt eine einstufige Signalsäule 8, wobei das Abstrahlelement 1 jedoch eine Abstrahlfläche 4 aufweist und zwischen der Abstrahlfläche 4 und den LED's 3 wiederum ein Abschnitt 12 angeordnet ist. Der Abschnitt 12 weist wiederum eine polierte Oberfläche auf und leitet das Licht weiter.

Darüber hinaus ist bei dieser Variante eine Vorschaltoptik 17 bzw. ein Linsensystem 17 oder dergleichen vorgesehen, womit das von den LED's 3 generierte (in den Figur 4b und 4c lediglich angedeutete) Warnlicht 6 in vorteilhafter Weise geleitet bzw. geführt und in die Stirnseite gemäß der Erfindung eingekoppelt werden kann, sodass die Einkopplung in das Abstrahlelement 1 verbessert wird.

Bei den Varianten gemäß Figur 4b und 4c sind je eine mehrstufige Signalsäule 8 abgebildet, die konzentrische Schichten aufweist (vgl. Figur 4d), wobei beispielsweise jede Schicht bzw. jeder Ring eine gemeinsame Warnleuchtfarbe aufweist. Beispielsweise sind stirnseitig ringförmig LED's 3 gleicher Farbe angeordnet, sodass diese gemäß der schematischen Draufsicht in Figur 4d je Kreisring eine gemeinsame Warnleuchtfarbe (in den Figur 4b und 4c lediglich als angedeutetes Warnlicht 6 dargestellt) in das Abstrahlelement 1 einkoppeln und durch vorteilhafte Umlenkung bzw. Streuung innerhalb des Rings bzw. der Schicht/Struktur 19 das entsprechende Warnlicht 6 an unterschiedlichen Abschnitten bzw. Flächen 4 auskoppelt.

Hierdurch wird jeder Warnleuchtfarbe jeweils eine definierte Abstrahlfläche 4 zugeordnet. D.h. es sind in Längsrichtung L unterschiedliche Abstrahlflächen 4 vorgesehen sind, die jeweils zum Auskoppeln unterschiedlich farbigem Licht 6 vorgesehen sind. Bei der Variante gemäß Figur 4b ist eine vorkonfigurierte mehrstufige Signalsäule 8 dargestellt, deren Warnleuchteinheiten als eine einzige Baueinheit/-element ausgebildet ist.

Dagegen ist in Figur 4c eine entsprechend modular aufgebaute, mehrstufige Signalsäule 8 schematisch dargestellt. Hierbei können die einzelnen Module 18 ohne nähere Darstellung mechanisch verbunden und im verbundenen Zustand auch optisch miteinander gekoppelt werden, sodass die Lichtleitung von einem Modul 18 zu einem benachbarten Modul 18 optisch gekoppelt bzw. verbunden ist.

Bei beiden Varianten gemäß Figuren 4b und 4c ist ein vorgegebener bzw. definierter Zusammenhang der jeweiligen Schicht mit der jeweiligen Anordnung der Abstrahlfläche 4 in Längsrichtung L realisiert. Das bedeutet, dass die Queranordnung der LED's 3 an den Stirnseiten in Abhängigkeit bzw. definiert mit der Längsanordnung/-ausdehnung der Abstrahlflächen 4 mit Hilfe der Streumittel gemäß der Erfindung vorgegeben ist.

Darüber hinaus kann ohne nähere Darstellung beispielsweise auch eine Schicht vorgesehen werden, die beispielsweise im Betrieb rot leuchtet und sich nicht nur über einen einzigen Teilabschnitt bzw. ein einziges Modul 18 in Längsrichtung erstreckt, sondern bei den Varianten der Figuren 4b oder 4c über mehrere Module 18 oder sogar im Wesentlichen über die gesamte Länge der Signalsäule 8 erstreckt, d.h. über die gesamte Länge der jeweiligen Leuchtkörper bzw. der gemeinsamen Baueinheit bzw. aller Module 18. Auch kann ein Lauflicht-Betrieb der ringförmig angeordneten LED's für die Signalisierung von Vorteil sein.

Generell kann mit Hilfe der vorliegenden Erfindung eine Betriebszustandswarnleuchtvorrichtung realisiert werden, die nicht nur mit plattenartigen bzw. kachelartigen Aufbau (vgl. Figuren 1 und 2) realisiert werden kann, sondern es können auch neuartige zylinderförmige Signalsäulen 8 gemäß den Varianten von Figur 4 als Warnleuchtstab oder dergleichen realisiert werden. Dieser Warnleuchtstab kann im ausgeschalteten Zustand (leicht) milchig bzw. trübe oder völlig oder fast vollständig transparent ausgebildet werden, sodass dieser sehr unscheinbar bzw. wenig auffällig ist.

Die Herstellung entsprechender plattenförmiger Abstrahlelemente 1 gemäß Figuren 1, 2 oder zylinderförmiger Abstrahlelemente 1 gemäß Figur 4a oder hohlzylinderförmiger, konzentrisch zueinander angeordneter Hohlzylinderschichten gemäß den Varianten von Figur 4b, 4c, 4d kann gegenüber herkömmlichen komplexen Kalotten deutlich wirtschaftlich günstiger hergestellt werden.

Generell kann eine Vorrichtung gemäß der Erfindung auch mit anderen bzw. zahlreichen anderen Vorrichtungen in einem vorteilhaften elektronischen Signalgerätenetzwerk miteinander (drahtlos) verbunden bzw. betrieben werden.

Generell kann für eine Warnleuchteinheit 1, 4 bzw. ein Modul 18 als Lichtquelle/Lichtquellen vorzugsweise eine oder mehrere LED oder dergleichen, aber auch wenigstens ein Laser zur Erzeugung von sichtbarem Warnlicht 6 bzw. Laserlicht vorgesehen werden.

### Bezugszeichenliste

- 1: Abstrahlelement
- 2: Stirnseite
- 3: LED
- 4: Abstrahlfläche
- 5: Diffusor
- 6: Licht
- 7: Reflektor
- 8: Signalsäule
- 9: Rahmen
- 10: Steuereinheit
- 11: Stirnseite
- 12: Abschnitt
- 13: Teil
- 14: Teil
- 15: Aussparung
- 16: Fläche
- 17: Optik/Linse
- 18: Modul
- 19: Struktur

- L: Längsrichtung

## Patentansprüche

1. Betriebszustandswarnleuchtvorrichtung zur optischen Anzeige von wenigstens einem Betriebszustand bzw. von mehreren, unterschiedlichen Betriebszuständen, von einem technischen Gerät wie einer Maschine, einer Anlage, eines Fahrzeugs oder dergleichen mit wenigstens einer Warnleuchteinheit (1, 4), wobei die Warnleuchteinheit (1, 4) wenigstens ein Warnleuchtelement (3) zur Erzeugung von Warnlicht (6) aufweist, wobei die Warnleuchteinheit (1, 4) ein wenigstens eine Warnleucht-Abstrahlfläche (4) aufweisendes Abstrahlelement (1) zum Abstrahlen des Warnlichtes (6) aufweist, wobei das Abstrahlelement (1) wenigstens eine quer zur Warnleucht-Abstrahlfläche (4) ausgerichtete Stirnseitenfläche (2) aufweist, wobei das Warnleuchtelement (3) an der Stirnseitenfläche (2) zum Einkoppeln des Warnlichts (6) in das Abstrahlelement (1) angeordnet ist und dass das Abstrahlelement (1) Streumittel (5, 15, 19) zum Streuen des Warnlichtes (6) aufweist, so dass das Warnlicht (6) über die Stirnseitenfläche (2) in das Abstrahlelement (1) eintritt und zur Warnleucht-Abstrahlfläche (4) umlenkbar ist, wobei die Betriebszustandswarnleuchtvorrichtung mehrstufig ist und als Signalsäule mit Abstrahlelementen (1) ausgebildet ist, **dadurch gekennzeichnet, dass** die Streumittel (5, 15, 19) als am und/oder innerhalb des Abstrahlelements (1) angeordnete Streukörper (17) und/oder Streupartikel (17) ausgebildet sind, dass die Abstrahlelemente (1) miteinander verbindbar und wieder lösbar ausbildbar sind, so dass ein modularer Aufbau einer mehrstufigen Betriebszustandswarnleuchtvorrichtung realisierbar ist, und dass eine Energieversorgung und/oder Informationsdatenleitung zu jedem Modul (18) vorgesehen ist.

2. Vorrichtung nach Anspruch 1, **dadurch gekennzeichnet, dass** die Stirnseitenfläche (2) kleiner als die Warnleucht-Abstrahlfläche (4) ist.

3. Vorrichtung nach einem der vorgenannten Ansprüche, **dadurch gekennzeichnet, dass** die Streumittel (5, 15, 19) als an der Warnleucht-Abstrahlfläche (4) und/oder Oberfläche des Abstrahlelements (1) angeordnete Diffusorfläche (5) und/oder Diffusorschicht (5) ausgebildet sind.

4. Vorrichtung nach einem der vorgenannten Ansprüche, **dadurch gekennzeichnet, dass** die Streumittel (5, 15, 19) als innerhalb des Abstrahlelements (1) angeordnete Diffusorfläche (4, 5, 15, 19) und/oder Diffusorschicht (5, 15, 19) ausgebildet sind.

5. Vorrichtung nach einem der vorgenannten Ansprüche, **dadurch gekennzeichnet, dass** das Abstrahlelement (1) im Wesentlichen aus Vollmaterial gebildet ist.

6. Vorrichtung nach einem der vorgenannten Ansprüche, **dadurch gekennzeichnet, dass** das Abstrahlelement (1) im Wesentlichen als Platte oder als Zylinder oder als Hohlzylinder ausgebildet ist.

7. Vorrichtung nach einem der vorgenannten Ansprüche, **dadurch gekennzeichnet, dass** die Betriebszustandswarnleuchtvorrichtung als Signalsäule mit wenigstens drei Warnleuchteinheiten (1, 4) und/oder drei separat leuchtbaren Warnleucht-Auskoppelflächen (4) und/oder Abstrahlelementen (1) ausgebildet ist.

8. Vorrichtung nach einem der vorgenannten Ansprüche, **dadurch gekennzeichnet, dass** die Signalsäule lösbar verbindbare sowie das Warnlicht (6) leitende, optisch verbindbare Warnleuchteinheiten (18) aufweist.

9. Vorrichtung nach einem der vorgenannten Ansprüche, **dadurch gekennzeichnet, dass** wenigstens drei Abstrahlelemente (1, 4) in Richtung der Warnlicht-Auskopplung hintereinander bzw. nebeneinander als Schichtaufbau angeordnet sind.

10. Vorrichtung nach einem der vorgenannten Ansprüche, **dadurch gekennzeichnet, dass** wenigstens drei Abstrahlelemente (1) konzentrisch zueinander angeordnet sind.

11. Vorrichtung nach einem der vorgenannten Ansprüche, **dadurch gekennzeichnet, dass** das Warnleuchtelement (3) als Laserelement (3) zur Erzeugung von Laserlicht (6) ausgebildet ist.

## Claims

1. An operating status warning light device for the optical display of at least one operating status or of several different operating statuses, of a technical device such as a machine, an installation, a vehicle or the like with at least one warning light unit (1, 4), wherein the warning light unit (1, 4) has at least one warning light element (3) for generating warning light (6), wherein the warning light unit (1, 4) has an emission element (1) having at least one warning light-emission surface (4) for the emission of the warning light (6), wherein the emission element (1) has at least one front side surface (2) aligned transversely to the warning light-emission surface (4), wherein the warning light element (3) is arranged on the front side surface (2) for coupling the warning light (6) into the emission element (1) and that the emission element (1) has diffusion means (5, 15, 19) for diffusion of the warning light (6), so that the warning light (6) enters via the front side surface (2) into the emission element (1) and can be deflected to the warning light-emission surface (4), wherein the operating status warning light device is multi-stage and is designed as a signal column with emission elements (1), **characterized in that** the diffusion means (5, 15, 19) are designed as diffusion bodies (17) and/or diffusion particles (17) arranged on and/or within the emission element (1), that the emission elements (1) can be combined with other and can be detachably reconfigured, so that a modular structure of a multi-stage operating status warning light device can be realized, and that an energy supply and/or information data line is provided for each module (18).

2. A device according to Claim 1, **characterized in that** the front side surface (2) is smaller than the warning light-emission surface (4).

3. A device according to one of the aforementioned claims, **characterized in that** the diffusion means (5, 15, 19) are designed as diffusor surface (5) and/or diffusor layer (5) arranged on the warning light-emission surface (4) and/or surface of the emission element (1).

4. A device according to one of the aforementioned claims, **characterized in that** the diffusion means (5, 15, 19) are designed as diffusor surface (4, 5, 15, 19) and/or diffusor layer (5, 15, 19) arranged within the emission element (1).

5. A device according to one of the aforementioned claims, **characterized in that** the emission element (1) is formed substantially from solid material.

6. A device according to one of the aforementioned claims, **characterized in that** the emission element (1) is designed substantially as a plate or as a cylinder or as a hollow cylinder.

7. A device according to one of the aforementioned claims, **characterized in that** the operating status warning light device is designed as a signal column with at least three warning light units (1, 4) and/or three separate illuminable warning light-uncoupling surfaces (4) and/or emission elements (1).

8. A device according to one of the aforementioned claims, **characterized in that** the signal column has detachably combinable warning light units (18) as well as optically combinable warning light units conducting the warning light (6).

9. A device according to one of the aforementioned claims, **characterized in that** at least three emission elements (1, 4) are arranged behind each other or next to each other as a layer structure in the direction of the warning light-uncoupling.

10. A device according to one of the aforementioned claims, **characterized in that** at least three emission elements (1) are arranged concentrically to each other.

11. A device according to one of the aforementioned claims, **characterized in that** the warning light element (3) is designed as a laser element (3) for generation laser light (6).

## Revendications

1. Dispositif de voyant d'avertissement d'état de fonctionnement pour un affichage optique d'au moins un état de fonctionnement ou de plusieurs états de fonctionnement différents d'un appareil technique, tel qu'une machine, une installation, un véhicule ou similaires, avec au moins une unité de voyant d'avertissement (1, 4), dans lequel l'unité de voyant d'avertissement (1, 4) présente au moins un élément de voyant d'avertissement (3) pour produire une lumière d'avertissement (6), dans lequel l'unité de voyant d'avertissement (1, 4) présente un élément rayonnant (1) présentant au moins une surface de rayonnement de voyant d'avertissement (4) pour émettre la lumière d'avertissement (6), dans lequel l'élément rayonnant (1) présente au moins une surface frontale (2) orientée transversalement à la surface de rayonnement de voyant d'avertissement (4), dans lequel l'élément de voyant d'avertissement (3) est disposé sur la surface frontale (2) pour injecter la lumière d'avertissement (6) dans l'élément rayonnant (1), et l'élément rayonnant (1) présente des moyens de diffusion (5, 15, 19) pour diffuser la lumière d'avertissement (6), de sorte que la lumière d'avertissement (6) entre dans l'élément rayonnant (1) en passant par la surface frontale (2) et peut être déviée vers la surface de rayonnement de voyant d'avertissement (4), dans lequel le dispositif de voyant d'avertissement d'état de fonctionnement dispose de plusieurs niveaux et est réalisé sous la forme d'une borne de signalisation avec des éléments rayonnants (1), **caractérisé en ce que** les moyens de diffusion (5, 15, 19) sont réalisés sous la forme de corps de diffusion (17) disposés sur et/ou à l'intérieur de l'élément rayonnant (1) et/ou de particules de diffusion (17), **en ce que** les éléments rayonnants (1) peuvent être réalisés pour être rattachés ensemble et de nouveau détachés, de sorte qu'une construction modulaire d'un dispositif de voyant d'avertissement d'état de fonctionnement à plusieurs niveaux peut être réalisée, et **en ce qu'**une alimentation en énergie et/ou une ligne de transmission de données d'informations est/sont prévue(s) jusqu'à chaque module (18).

2. Dispositif selon la revendication 1, **caractérisé en ce que** la surface frontale (2) est inférieure à la surface de rayonnement de voyant d'avertissement (4).

3. Dispositif selon l'une quelconque des revendications précédentes, **caractérisé en ce que** les moyens de diffusion (5, 15, 19) sont réalisés sous la forme d'une surface de diffuseur (5) et/ou d'une couche de diffuseur (5) disposée(s) sur la surface de rayonnement de voyant d'avertissement (4) et/ou la surface de l'élément rayonnant (1).

4. Dispositif selon l'une quelconque des revendications précédentes, **caractérisé en ce que** les moyens de diffusion (5, 15, 19) sont réalisés sous la forme d'une surface de diffuseur (4, 5, 15, 19) et/ou d'une couche de diffuseur (5, 15, 19) disposée(s) à l'intérieur de l'élément rayonnant (1).

5. Dispositif selon l'une quelconque des revendications précédentes, **caractérisé en ce que** l'élément rayonnant (1) est réalisé substantiellement en matériau plein.

6. Dispositif selon l'une quelconque des revendications précédentes, **caractérisé en ce que** l'élément rayonnant (1) est réalisé substantiellement sous la forme d'une plaque ou d'un cylindre ou d'un cylindre creux.

7. Dispositif selon l'une quelconque des revendications précédentes, **caractérisé en ce que** le dispositif de voyant d'avertissement d'état de fonctionnement est réalisé sous la forme d'une borne de signalisation avec au moins trois unités de voyant d'avertissement (1, 4) et/ou trois surfaces de sortie de voyant d'avertissement (4) pouvant s'éclairer séparément et/ou des éléments rayonnants (1).

8. Dispositif selon l'une quelconque des revendications précédentes, **caractérisé en ce que** la borne de signalisation présente des unités de voyant d'avertissement (18) pouvant être reliées de manière amovible, conduisant la lumière d'avertissement (6) et pouvant être reliées de manière optique.

9. Dispositif selon l'une quelconque des revendications précédentes, **caractérisé en ce qu'**au moins trois éléments rayonnants (1, 4) sont disposés successivement dans la direction de sortie de lumière d'avertissement ou côte à côte sous forme de structure stratifiée.

10. Dispositif selon l'une quelconque des revendications précédentes, **caractérisé en ce qu'**au moins trois éléments rayonnants (1) sont disposés de manière concentrique les uns par rapport aux autres.

11. Dispositif selon l'une quelconque des revendications précédentes, **caractérisé en ce que** l'élément de voyant d'avertissement (3) est réalisé sous la forme d'un élément laser (3) pour produire une lumière laser (6).
